# FASCICULE DE BREVET EUROPEEN

(11) **EP 2 402 733 B1**
(45) Date de publication et mention de la délivrance du brevet: **24.07.2013**
(21) Numéro de dépôt: 11170283.3
(22) Date de dépôt: 17.06.2011
(51) Int. Cl.: G01N 9/00

(54) **Procédé de mesure précise de la densité d'un échantillon**
Präzises Messverfahren der Dichte einer Probe
Method for precise measurement of the density of a sample

(30) Priorité: 02.07.2010 FR 1055354
(43) Date de publication de la demande: 04.01.2012
(73) Titulaire: Instrumentation Scientifique de Laboratoire (ISL), 14653 Carpiquet (FR)
(72) Inventeur: Borys, Richard, 14000 Caen (FR); Urvantsau, Viachaslau, 14320 Fontenay le Marmion (FR)
(74) Mandataire: Cabinet HERRBURGER

(56) Documents cités:
- FR-A- 1 531 961
- JP-A- 2008 145 444
- US-A- 4 655 075
- US-A1- 2009 084 178

## Description

### Domaine de l'invention

La présente invention a pour objet un procédé de mesure précise de la densité d'un échantillon.

### Etat de la technique

Parmi les mesures physiques devant être effectuées dans le cadre des procédés industriels, celle de la densité figure parmi les plus fréquemment nécessaires.

A cet effet, les fabricants proposent sur le marché une gamme de densimètres basés sur différents principes, dont tous présentent des avantages et des inconvénients.

Un densimètre pouvant être utilisé de manière satisfaisante pour mesurer la densité d'un échantillon est équipé d'une cellule de mesure comportant les éléments suivants :
- une enceinte massive de très bonne conductivité thermique qui définit à sa partie interne une chambre de mesure fermée par un bouchon,
- un tube en U maintenu à la masse et fixé au bouchon qui est destiné à être rempli par l'échantillon à analyser et s'étend dans la chambre de mesure,
- une plaque de lecture conductrice isolée maintenue à une différence de potentiel par rapport au tube en U et fixée au bouchon en regard de ce tube de façon à définir un condensateur avec celui-ci,
- une bobine d'excitation électromagnétique montée dans un logement de l'enceinte au droit de l'élément ferromagnétique, et
- des moyens de commande de la bobine ainsi que des moyens de lecture de la tension aux bornes du condensateur.

Le tube en U de la cellule d'un densimètre de ce type comporte d'une part une branche centrale équipée d'un élément ferromagnétique à sa partie médiane et d'autre part deux branches latérales faisant saillie vers l'extérieur de la chambre de mesure pour permettre l'injection de l'échantillon à analyser dans le tube en U et l'évacuation de cet échantillon.

Le principe de la mesure de la densité d'un échantillon à l'aide d'un tel densimètre consiste à faire vibrer le tube en U à la fréquence de résonance et à déterminer cette fréquence à partir des variations de la tension aux bornes du condensateur.

La fréquence de résonance permet en effet de calculer en première approximation la densité de l'échantillon à analyser en se basant sur une équation standard connue en elle-même et à partir d'une calibration préalable du densimètre.

Un tel calcul n'est toutefois admissible que si l'on ne recherche pas une précision supérieure à e⁻⁴ g/ml car il ne tient pas compte de l'effet amortisseur dû à la viscosité de cet échantillon.

Différents algorithmes ont déjà été proposés pour tenir compte de ce paramètre viscosité, mais tous présentent l'inconvénient de nécessiter plusieurs mesures, ce qui les rend à la fois longs et onéreux.

Des densimètres du type susmentionné sont à titre d'exemple décrits dans les brevets américains suivants : US 4 132 110 ; US 4 170 128 ; US 4491009; US 4 524 610 ; US 4655075; US 4 838 084 ; US 4912962; US 5339258; US 5477726; US 6 334 356 et US 6 647 778.

Des procédés de mesure de la densité d'échantillons sont en outre décrits dans les documents US 2009/084 178 A1 ; FR 1 531 961 A ; US 4 655 075 A et JP 2008 145 444 A.

### But de l'invention

La présente invention a pour objet de proposer un procédé de mesure précise de la densité d'un échantillon à l'aide d'une cellule densimétrique du type susmentionné de nature à remédier à ces inconvénients.

### Exposé et avantages de l'invention

Selon l'invention, la première étape de ce procédé consiste à injecter l'échantillon à analyser dans le tube en U de cette cellule.

L'étape suivante consiste à actionner les moyens de commande de la bobine de façon à transmettre en permanence au tube en U un signal d'excitation rectangulaire synchronisé permettant de faire vibrer ce tube à la fréquence de résonance.

Cette vibration entraîne des variations constantes de la tension aux bornes du condensateur qui sont représentées sur un oscillographe par un signal de résonance V = f(t) sinusoïdal.

Le signal d'excitation est centré par rapport au zéro de ce signal de résonance.

Il est plus précisément connu que la densité d d'un fluide est approximativement une fonction linéaire du carré de la période de résonance T_{R} qui peut être déterminée à partir du signal de résonance et donc des variations de la tension aux bornes du condensateur.

Pour un densimètre donné cette droite d=f(T_{R})² peut être établie lors d'une étape de calibration préalable consistant à obtenir deux points de référence à partir de produits dont on connaît la densité.

Cette calibration s'effectue en règle générale en injectant de l'eau pure et de l'air sec dans le tube en U.

Une valeur approchée de la densité d'un échantillon à analyser peut ensuite être lue sur la droite d=f(T_{R})² établie lors de l'étape de calibration préalable.

Cette valeur approchée de la densité est toutefois entachée d'une erreur dans la mesure où elle ne tient pas compte de la viscosité de cet échantillon.

Or, pour que le signal de résonance sinusoïdal représentatif de la vibration du tube en U soit aussi « propre » que possible, et que son amplitude ne diminue pas au cours du temps, il est nécessaire que le signal d'excitation rectangulaire qui transmet l'énergie à apporter pour maintenir cette amplitude ait une largeur d'autant plus importante que l'échantillon à analyser est visqueux.

Pour tenir compte de cet impératif, il est proposé, conformément à l'invention de contrôler et de maîtriser cette largeur d'impulsion du signal d'excitation rectangulaire de façon à maintenir l'amplitude du signal de résonance à une valeur constante prédéfinie.

La largeur d'impulsion ainsi réglée permet de déterminer, dans une autre étape du procédé conforme à l'invention un facteur de correction qui dépend de la viscosité de l'échantillon à analyser.

La densité réelle de cet échantillon peut ensuite être calculée en se basant sur la valeur approchée de cette densité précédemment déterminée et sur ce facteur de correction.

Le procédé conforme à l'invention présente ainsi l'avantage de pouvoir être mis en oeuvre en direct, dans la mesure où il permet d'obtenir simultanément d'une part une valeur approchée de la densité d'un échantillon à analyser et d'autre part un facteur de correction dépendant de la viscosité de cet échantillon, qui permettent de calculer précisément dans une étape ultérieure la densité réelle de celui-ci.

### Dessins

Les caractéristiques du procédé qui fait l'objet de l'invention seront décrites plus en détail en se référant aux dessins non limitatifs annexés dans lesquels :
- la figure 1 est un schéma illustratif de la configuration de la cellule de mesure du densimètre mis en oeuvre conformément à la l'invention,
- les figures 2, 3 et 4 représentent trois exemples d'oscillogrammes obtenus à partir d'un tel densimètre lors de la mise en oeuvre du procédé conforme à l'invention respectivement dans le cas de l'analyse d'un échantillon constitué par de l'air sec, d'un échantillon de densité d = 0,9 g/ml faiblement visqueux et d'un échantillon de densité d = 0,9 g/ml plus fortement visqueux.

### Description d'un mode de réalisation de l'invention

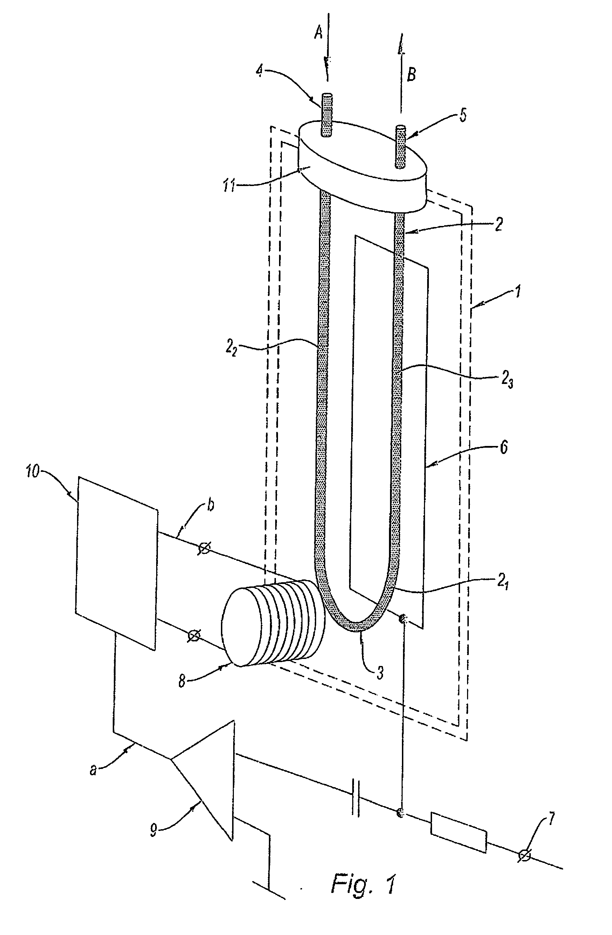

Selon la figure 1, la cellule de mesure du densimètre comporte une enceinte massive de très bonne conductivité thermique schématisée en pointillés qui définit à sa partie interne une chambre thermostatique 1.

Cette chambre thermostatique 1 est fermée par un bouchon 11 à sa partie supérieure.

La chambre thermostatique 1 renferme à sa partie interne, un tube en U 2 maintenu à la masse et comportant une branche centrale 2₁ ainsi que deux branches latérales 2₂, 2₃, qui s'étendent verticalement vers le haut à partir de la branche centrale 2₁.

Les deux branches latérales 2₂, 2₃, sont fixées au bouchon 11 au niveau de leur extrémité libre et font saillie vers l'extérieur de la chambre thermostatique 1, de façon à permettre l'injection d'un échantillon à analyser par un orifice d'injection 4 selon la flèche A et l'évacuation de cet échantillon par un orifice d'évacuation 5 selon la flèche B.

La branche centrale 2₁ du tube en U 2 est équipée à sa partie médiane d'un élément ferromagnétique 3 dont la fonction sera précisée dans la suite de cet exposé.

La chambre thermostatique 1, renferme également à sa partie interne une plaque de lecture conductrice isolée 6.

Cette plaque de lecture 6 fixée elle aussi au bouchon 11 en regard du tube en U 2 est reliée à une source haute tension 7 de façon à être constamment maintenue à une différence de potentiel par rapport à ce tube, et à définir un condensateur avec celui-ci.

Une bobine d'excitation électromagnétique 8 est montée en regard de la branche centrale 2₁ du tube en U 2, au droit de l'élément ferromagnétique 3.

Cette bobine d'excitation 8 est commandée par un contrôleur 10 de sorte qu'elle transmette en permanence au tube en U 2 et plus précisément à l'élément ferromagnétique 3, un signal d'excitation rectangulaire synchronisé qui permet de faire vibrer ce tube à la fréquence de résonance.

Cette vibration entraîne des variations constantes de la tension aux bornes du condensateur 2, 6 qui sont représentées par un signal de résonance V = f (t) sinusoïdal.

Ce signal de résonance dont la période est fonction de la densité de l'échantillon à analyser est transmis à un amplificateur 9 et est prélevé au niveau d'un point de contrôle a pour permettre sa lecture sur un oscillographe.

Ce signal de résonance sinusoïdal est en outre transmis en permanence au contrôleur 10 qui commande en retour la largeur d'impulsion du signal d'excitation rectangulaire transmis à la bobine d'excitation 8, de façon à maintenir l'amplitude du signal de résonance sinusoïdal à une valeur constante prédéfinie.

Le signal d'excitation rectangulaire ainsi réglé, dont la largeur est fonction de la viscosité de l'échantillon à analyser, est prélevé au niveau d'un point de contrôle b pour permettre sa lecture sur un oscillographe.

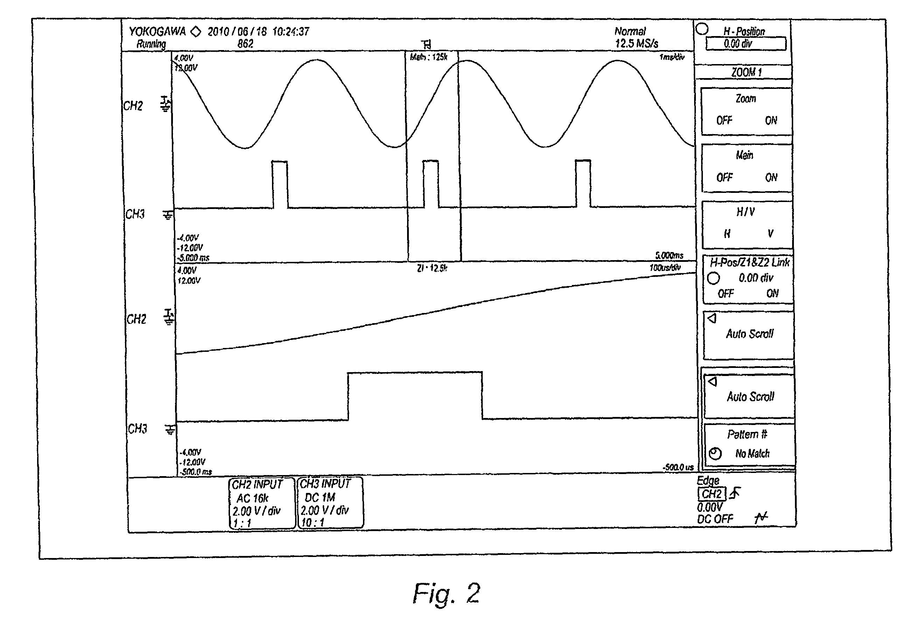

Des oscillogrammes ainsi obtenus sont représentés sur les figures 2, 3 et 4.

Sur chacun de ces oscillogrammes le signal de résonance sinusoïdal et le signal d'excitation rectangulaire sont représentés en partie haute sur 2 à 4 périodes de vibration et en partie basse avec un agrandissement de 10 fois.

On a ainsi pu mesurer dans chaque cas d'une part la période t₁ du signal de résonance sinusoïdal et d'autre part, la largeur d'impulsion t₂ du signal d'excitation rectangulaire.

Selon la figure 2 qui représente les chromatogrammes d'air sec, c'est-à-dire que l'on n'a pas injecté d'échantillon dans le tube en U t₁ = 2,9 e'⁻³ sec et t₂ = 2,5 e⁻⁴ sec.

La masse du tube en U qui ne renferme pas d'échantillon est alors minimum donc la fréquence de résonance maximum et les durées t₁ et t₂ sont également minima.

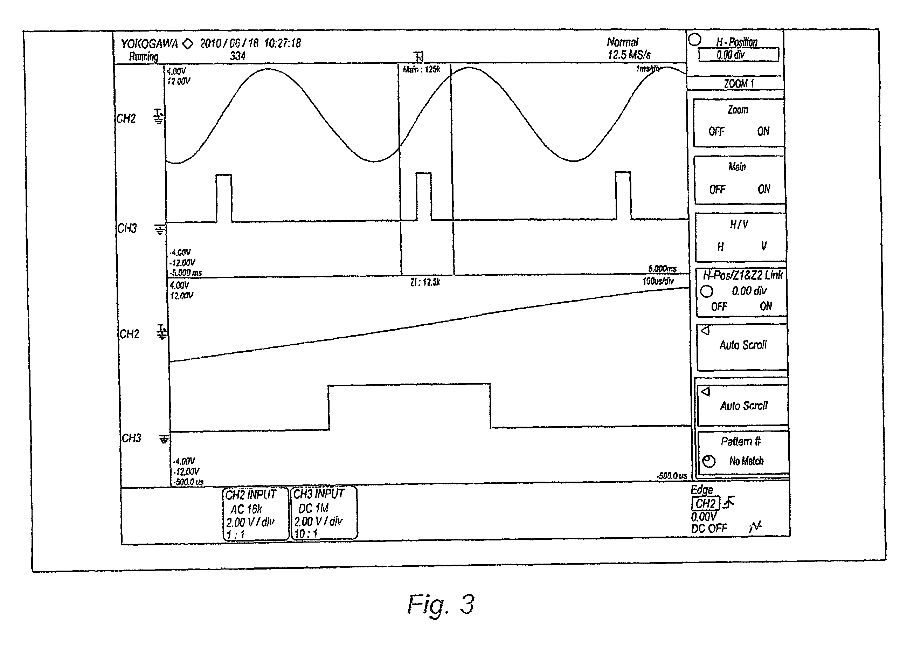

Selon la figure 3, qui représente les chromatogrammes d'un échantillon de densité d = 0,9 g/ml faiblement visqueux, t₁ = 3,8 e⁻³ sec et t₂ = 3,1 e⁻⁴ sec.

Par rapport au cas représenté sur la figure 2, la masse du tube est supérieure et donc la fréquence de résonance inférieure.

De plus, la dissipation de l'énergie de vibration est plus importante et par suite le contrôleur 10 doit augmenter la largeur d'impulsion du signal d'excitation rectangulaire pour compenser la diminution de l'amplitude.

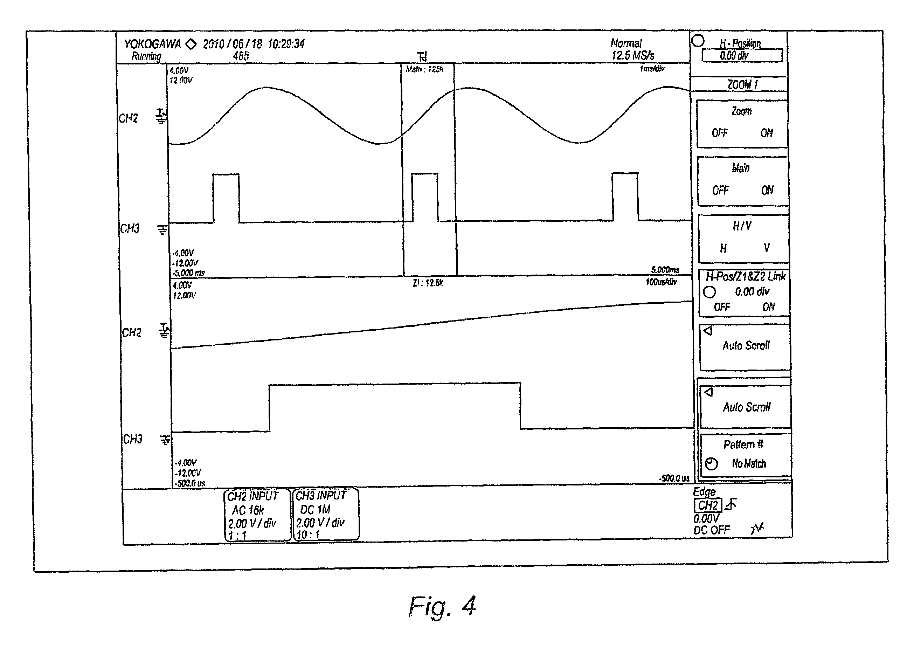

Selon la figure 4 qui représente les chromatogrammes d'un échantillon de densité d = 0,9 g/ml plus fortement visqueux, t₁ = 3,8 e⁻³ sec et t₂ = 4,8 e'⁻⁴ sec.

Les fréquences de résonance mesurées sur les chromatogrammes correspondant aux figures 3 et 4 sont les mêmes dans la mesure où les échantillons injectés dans le tube en U, ont la même densité.

En revanche, selon la figure 4, compte tenu de la viscosité de l'échantillon injecté, la dissipation de l'énergie de vibration est maximum et par suite la largeur d'impulsion du signal d'excitation rectangulaire est également maximum pour permettre de compenser la diminution d'amplitude.

## Revendications

1. Procédé de mesure précise de la densité d'un échantillon à l'aide d'un densimètre équipé d'une cellule de mesure comportant :
- une enceinte massive de très bonne conductivité thermique définissant à sa partie interne une chambre de mesure (1) fermée par un bouchon (11),
- un tube en U (2) maintenu à la masse destiné à être rempli par l'échantillon à analyser et s'étendant dans la chambre de mesure (1), ce tube en U (2) comportant une branche centrale (21) équipée d'un élément ferromagnétique (3) à sa partie médiane ainsi que deux branches latérales (22, 23) fixées au bouchon au niveau de leur extrémité libre et faisant saillie vers l'extérieur de la chambre de mesure (1) pour permettre l'injection de l'échantillon à analyser dans le tube en U (2) et l'évacuation de cet échantillon,
- une plaque de lecture conductrice (6) isolée maintenue à une différence de potentiel par rapport au tube en U (2) et fixée au bouchon (11) en regard de ce tube (2) de façon à définir un condensateur avec celui-ci,
- une bobine d'excitation électromagnétique (8) montée dans un logement de l'enceinte au droit de l'élément ferromagnétique (3), et
- des moyens de commande de la bobine ainsi que des moyens de lecture de la capacité du condensateur,
procédé **caractérisé par** les étapes suivantes :
- on injecte l'échantillon à analyser dans le tube en U (2),
- on actionne les moyens de commande de la bobine de sorte qu'elle transmette en permanence au tube en U (2) un signal d'excitation rectangulaire synchronisé permettant de faire vibrer ce tube à la fréquence de résonance, cette vibration étant représentée par un signal de résonance sinusoïdal,
- on détermine la fréquence de résonance à partir des variations de la tension aux bornes du condensateur (2, 6) et on en déduit une valeur approchée de la densité de l'échantillon à analyser en se basant sur une équation standard connue en elle-même,
- on contrôle la largeur d'impulsion du signal d'excitation rectangulaire pour maintenir une amplitude constante prédéfinie du signal de résonance et on en déduit un facteur de correction dépendant de la viscosité de l'échantillon à analyser, et
- on calcule la densité réelle de l'échantillon à analyser en se basant sur la valeur approchée de cette densité précédemment déterminée et sur le facteur de correction.

## Patentansprüche

1. Präzisionsmessverfahren für die Dichte einer Probe mit Hilfe eines mit einer Messzelle versehenen Densimeters, aufweisend:
- einen massiven Container mit sehr guter Wärmeleitfähigkeit, der in seinem Innenteil eine mit einem Verschluss (11) verschlossene Messkammer (1) definiert,
- ein U-Rohr (2), das an Masse gehalten wird, das dazu bestimmt ist, mit der zu analysierenden Probe gefüllt zu werden, und das sich in die Messkammer (1) ausstreckt, wobei dieses U-Rohr (2) einen mittleren, an seinem mittleren Teil mit einem ferromagnetischen Element (3) versehenen Zweig (21) sowie zwei Seitenzweige (22, 23) aufweist, die an ihren freien Enden an dem Verschluss befestigt sind, und aus der Messkammer (1) ragen, damit die analysierende Probe in das U-Rohr (2) eingespritzt und aus diesem entleert werden kahn,
- eine leitfähige isolierte Leseplatte (6), die an einer Potenzialdifferenz zum U-Rohr (2) gehalten wird und gegenüber vom Rohr (2) an den Verschluss (11) befestigt ist, so dass mit jenem ein Kondensator definiert ist,
- eine elektromagnetische bei dem ferromagnetischen Element (3) in einer Aufnahme des Containers eingebaute Erregungsspule (8), und
- Steuerungsmittel für die Spule, sowie Ablesemittel für die Kapazität des Kondensators,
wobei das Verfahren durch folgende Schritte gekennzeichnet ist:
- die zu analysierende Probe wird in das U-Rohr (2) eingespritzt,
- die Steuerungsmittel der Spule werden derart betätigt, dass diese ständig dem U-Rohr (2) ein rechteckiges synchronisiertes Ansteuerungssignal überträgt, womit dieses Rohr bei der Resonanzfrequenz in Schwingungen versetzt werden kann, wobei diese Schwingungen von einem sinusförmigen Resonanzsignal dargestellt werden,
- die Resonanzfrequenz wird ausgehend von den Spannungsänderungen an den Kondensatoranschlüssen (2, 6) bestimmt und ein Näherungswert der Dichte der zu analysierenden Probe wird daraus auf der Basis einer an sich bekannten Standardgleichung abgeleitet,
- die Impulsbreite des rechteckigen Ansteuerungssignals wird kontrolliert, damit eine konstante vorgegebene Amplitude des Resonanzsignals eingehalten wird, und ein von der Viskosität der zu analysierenden Probe abhängigen Korrekturfaktor wird abgeleitet, und
- die effektive Dichte der zu analysierenden Probe wird an Hand des zuvor bestimmten Näherungswertes dieser Dichte und des Korrekturfaktors berechnet.

## Claims

1. A method for accurately measuring the density of a sample using a densimeter equipped with a measurement cell comprising:
- a mass enclosure of very good heat conductivity defining in its internal part a measurement chamber (1) closed by a stopper (11),
- an earthed U-tube (2) designed to be filled by a sample to be analysed and extending inside the measurement chamber (1), said U-tube (2) including a central arm (21) equipped with a ferromagnetic member (3) in its median portion and two lateral arms (22, 23) secured to the stopper at their free ends and projecting outwardly from the measurement chamber (1) so that the sample to be analysed may be injected into the U-tube (2) and removed therefrom,
- an insulated conductive reading plate (6) maintained at a different potential with respect to the U-tube (2) and secured to the stopper (11) in a position facing the U-tube (2) in order to define a capacitor therewith,
- an electromagnetic excitation winding (8) mounted in a housing of the enclosure at a right angle to the ferromagnetic member (3), and
- means for driving the winding and means for reading the capacity of the capacitor,
said method being **characterized by** the following steps:
- injecting the sample to be analysed into the U-tube (2),
- activating the means for driving the winding such that it continuously transmits a synchronized rectangular excitation signal to the U-tube (2) by means of which the U-tube is caused to vibrate at resonance frequency, said vibration being represented by a sinusoidal resonance signal,
- determining the resonance frequency from the variations in the voltage at the terminals of the capacitor (2, 6) and deducing an approximate value of the density of the sample to be analysed on the basis of a standard equation known per se;
- controlling the pulse width of the rectangular excitation signal to maintain a predetermined constant amplitude of the resonance signal and deducing therefrom a correction factor dependent on the viscosity of the sample to be analysed, and
- calculating the actual density of the sample to be analysed on the basis of said previously determined approximate value of the density and the correction factor.
